# EUROPÄISCHE PATENTSCHRIFT

(11) **EP 3 578 349 B1**
(45) Veröffentlichungstag und Bekanntmachung des Hinweises auf die Patenterteilung: **19.01.2022**
(21) Anmeldenummer: 19178944.5
(22) Anmeldetag: 07.06.2019
(51) Int. Cl.: B29D 99/00, B29C 70/78, B29C 70/54, F03D 1/06, B29C 31/08

(54) **VERFAHREN UND VORRICHTUNG ZUR HERSTELLUNG EINES ROTORBLATTES FÜR EINE WINDENERGIEANLAGE**
WIND TURBINE AND METHOD AND DEVICE FOR PRODUCING A ROTOR BLADE FOR A WIND TURBINE
PROCÉDÉ ET DISPOSITIF DE FABRICATION D'UNE PÂLE DE ROTOR POUR UNE ÉOLIENNE

(30) Priorität: 08.06.2018 DE 102018004540
(43) Veröffentlichungstag der Anmeldung: 11.12.2019
(73) Patentinhaber: SENVION GmbH, 22297 Hamburg (DE)
(72) Erfinder: EYB, Enno, 24116 Kiel (DE)
(74) Vertreter: Schlotter, Alexander Carolus Paul

(56) Entgegenhaltungen:
- WO-A1-2012/104022
- WO-A1-2015/067280
- US-A1- 2016 040 651

## Beschreibung

Die Erfindung betrifft ein Verfahren und eine Vorrichtung zur Herstellung eines Rotorblattes für eine Windenergieanlage.

Zur Erhöhung der Steifigkeit von Rotorblättern werden sog. Gurte eingesetzt, die im Inneren des Rotorblatts in Längsrichtung verlaufen und insbesondere mit ebenfalls im Innern des Rotorblatts angeordneten und befestigten Stegen eine Tragstruktur des Rotorblatts bilden.

Bei der Herstellung von Gurten für Rotorblätter, die länger sind als ca. 60 m oder eine sog. Vorbiegung von mehr als ca. 3 m aufweisen, kommt es bei den typischerweise eingesetzten Harzinfusionsverfahren aufgrund der Geometrie zu Problemen. Insbesondere die Krümmung der Gurte senkrecht zum Hallenboden bzw. der hiermit verbundene Höhenunterschied sorgt für Schwierigkeiten. Es entstehen vermehrt Wellen im Laminat durch die Reaktionswärme der Aushärtung, welche zum Ausschuss der Gurte führen kann. Hierdurch wir die maximale Länge sowie die Vorbiegung der Gurte bzw. Rotorblätter begrenzt. Zusätzlich erfordern diese gekrümmte Gurte aufwändige Werkzeuge (Form, Ausziehvorrichtung, Laufgestelle) und erschweren nicht zuletzt die Logistik.

Für Rotorblätter mit über ca. 60 m Länge bzw. ca. 3 m Vorbiegung werden die Gurte daher unter Verwendung von extrem langsamen Harzsystemen bzw. in mehreren Herstellungsschritten oder aber aus Pultrudaten (d.h. mittels Strangziehverfahren) bzw. sog. Prepregs (d.h. vorimprägnierten Faserschichten) hergestellt. Diese Verfahren sind jedoch mit relativ hohen Kosten verbunden.

Die WO 2012/104022 A1 offenbart ein Halbzeug für die Herstellung eines faserverstärkten Bauteils einer Windkraftanlage, und insbesondere für die Herstellung eines Rotorblattgurts, wobei zur Anfertigung des Rotorblattgurts mehrere Faserhalbzeuge übereinander in eine entsprechende Rotorblattgurtform gelegt werden, unter Anwendung beispielsweise einer Resin-Infusion-Moulding-Technik (RIM) mit Harz durchtränkt werden, und nach Aushärtung des Harzes der Rotorblattgurt aus der Form oder Schale für die Fertigung des Rotorblatts entnommen wird, wodurch insbesondere nach Aushärtung des eingebrachten Harzes ein Rotorblattgurt als faserverstärktes Bauteil aus mindestens einem oder mehreren Faserhalbzeugen hergestellt ist, der anschließend für die Fertigung eines Rotorblatts bereitgestellt wird.

Es ist eine Aufgabe der Erfindung, ein Verfahren und eine Vorrichtung zur einfachen und kostengünstigen Herstellung eines Rotorblattes für eine Windenergieanlage anzugeben.

Diese Aufgabe wird durch ein Verfahren und eine Vorrichtung gemäß den unabhängigen Ansprüchen gelöst.

Ein Verfahren zur Herstellung eines Rotorblattes für eine Windenergieanlage, welches sich in einer Längsrichtung von einer Rotorblattwurzel zu einer Rotorblattspitze erstreckt, gemäß einem ersten Aspekt der Erfindung weist folgende Schritte auf: Herstellen mindestens einer sich in Längsrichtung erstreckenden Rotorblattschale, welche in ihrem Innern eine in Längsrichtung verlaufende Schalenkrümmung aufweist; Herstellen mindestens eines sich in Längsrichtung erstreckenden Gurtes durch Auflegen einer oder mehrerer Gurtlagen auf eine Gurtform, welche in Längsrichtung keine Krümmung und/oder eine von der Schalenkrümmung abweichende Krümmung aufweist, und zumindest teilweises Aushärten der auf die Gurtform aufgelegten Gurtlagen; Entnehmen des mindestens einen Gurtes aus der Gurtform und Einlegen des Gurtes in die mindestens eine Rotorblattschale, wobei sich der Gurt derart verformt, dass er sich an die Rotorblattschale anlegt und dabei der Schalenkrümmung im Wesentlichen folgt.

Eine Vorrichtung zur Herstellung eines Rotorblattes für eine Windenergieanlage, welches sich in einer Längsrichtung von einer Rotorblattwurzel zu einer Rotorblattspitze erstreckt, gemäß einem zweiten Aspekt der Erfindung weist auf: mindestens eine Halteeinrichtung zum Halten einer sich in Längsrichtung erstreckenden Rotorblattschale, welche in ihrem Innern eine in Längsrichtung verlaufende Schalenkrümmung aufweist; mindestens eine Gurtform, welche in Längsrichtung keine Krümmung und/oder eine von der Schalenkrümmung abweichende Krümmung aufweist und zum Herstellen mindestens eines sich in Längsrichtung erstreckenden Gurtes dazu ausgebildet ist, eine oder mehrere übereinander gelegte Gurtlagen aufzunehmen und die aufgenommenen Gurtlagen zumindest teilweise aushärten zu lassen; und mindestens eine Einrichtung zum Entnehmen des mindestens einen Gurtes aus der Gurtform und Einlegen des Gurtes in die von der Halteeinrichtung gehaltene Rotorblattschale, wobei sich beim Einlegen der Gurt derart verformt, dass er sich an die Rotorblattschale anlegt und dabei der Schalenkrümmung im Wesentlichen folgt.

Eine Windenergieanlage gemäß einem nicht beanspruchten Aspekt weist mindestens ein Rotorblatt auf, das nach dem Verfahren gemäß dem ersten Aspekt und/oder unter Verwendung der Vorrichtung gemäß dem zweiten Aspekt hergestellt wurde.

Aspekte der Erfindung basieren auf dem Ansatz, einen Gurt unter Verwendung einer Gurtform herzustellen, welche den Verlauf der Schalenkrümmung im Innern der Rotorblattschale, in welche der Gurt später eingebracht wird, nicht oder nur teilweise nachbildet. Insbesondere werden hierbei in der Gurtform Schalenkrümmungen mit größerem Krümmungsradius, wie z.B. im Bereich der Vorbiegung der Rotorblattschale, nicht berücksichtigt. Die auf diese Weise erhaltenen Gurte haben in Längsrichtung einen von der Schalenkrümmung im Innern der Rotorblattschale abweichenden, insbesondere einen im Wesentlichen geraden, Verlauf und sind so ausgelegt, dass sie nach einem zumindest teilweisen Aushärten aus der Gurtform entnommen und in die entsprechende Rotorblattschale eingelegt werden können, wobei sie sich aufgrund ihres Eigengewichts und/oder unter Zuhilfenahme eines Vakuums an die Rotorblattschale anlegen und dabei der Schalenkrümmung im Wesentlichen folgen.

Die Gurte werden vorzugsweise in Gurtformen hergestellt, welche langwellige Krümmungen des Rotorblattes, etwa im Bereich der Vorbiegung, nicht abbilden. Beim Einlegen der Gurte in die jeweilige Rotorblattschale sorgt die Schwerkraft bzw. ein zusätzlicher Vakuumdruck dann für ein vorzugsweise vollflächiges Anliegen der Gurte an der Rotorblattschale. Vorzugsweise werden im Werkzeug, d.h. in der Gurtform, zur Gurtherstellung lediglich kurzwellige Krümmungen im Innern der Rotorblattschale berücksichtigt, die durch Schwerkraft und/oder zusätzlichen Vakuumdruck nicht ausgeglichen werden können bzw. welche zu hohen Eigenspannungen in den Gurten führen würden. Vorzugsweise werden die Gurte bzw. die entsprechenden Gurtformen durch Struktur-Simulation soweit entkrümmt, dass sich die Gurte aufgrund ihres Eigengewichts und/oder unter Zuhilfenahme eines Vakuums eigenständig in die Rotorblattkontur einfügen. Dadurch können mit kostengünstigen Harzinfusionsprozessen deutlich längere Gurte als bisher hergestellt werden. Darüber hinaus sind die benötigten Werkzeuge, insbesondere Gurtformen, Laufgestelle und Ausziehvorrichtung, aufgrund der reduzierten

Krümmung bzw. dem verminderten Höhenunterschied kostengünstiger. Die Logistik, d.h. Transport und Lagerung, für die Gurte wird dadurch ebenfalls einfacher.

Insgesamt ermöglicht die Erfindung somit eine einfache und kostengünstige Herstellung von Rotorblättern.

Vorzugsweise werden in der Gurtform in Längsrichtung lediglich ein oder mehrere Abschnitte der Schalenkrümmung, deren jeweiliger Krümmungsradius einen vorgegebenen Grenzradius unterschreitet, nachgebildet und/oder angenähert. Umgekehrt werden vorzugsweise in der Gurtform in Längsrichtung Abschnitte der Schalenkrümmung, deren jeweiliger Krümmungsradius den vorgegebenen Grenzradius überschreitet, nicht nachgebildet und/oder nicht angenähert. Der vorgegebene Grenzradius ist vorzugsweise kleiner oder gleich 260 m, insbesondere kleiner oder gleich 200 m, vorzugsweise kleiner oder gleich 150 m oder 100 m, ist. Liegt der Grenzradius z.B. bei 150 m, so werden in der Gurtform bzw. im Gurt Abschnitte der Schalenkrümmung nicht nachgebildet, deren Krümmungsradius 150 m überschreitet, etwa der Abschnitt der Vorbiegung, wenn deren Krümmungsradius bzw. -radien über 150 m liegt bzw. liegen. Dagegen werden kurzwelligere Abschnitte der Schalenkrümmung, deren Krümmungsradius 150 m unterschreitet, in der Gurtform bzw. im Gurt nachgebildet oder angenähert. Durch die Berücksichtigung kleinerer Krümmungsradien in der Gurtform bzw. im Gurt wird erreicht, dass sich der Gurt auch an Stellen und/oder Abschnitten zuverlässig und/oder vollständig an die Rotorschale legt, an denen sein Eigengewicht und/oder ein zusätzliches Vakuum alleine nicht ausreichen würde, um ein im Wesentlichen vollständiges Anliegen des Gurtes an der Schale zu gewährleisten.

Vorzugsweise werden in der Gurtform in Längsrichtung lediglich ein oder mehrere Abschnitte der Schalenkrümmung nachgebildet und/oder angenähert, an welchen der herzustellende Gurt jeweils eine Dicke und/oder Steifigkeit aufweist, die eine vorgegebene Grenzdicke bzw. Grenzsteifigkeit überschreitet. Dadurch wird erreicht, dass sich der Gurt auch an Stellen und/oder Abschnitten zuverlässig an die Rotorschale legt, an denen aufgrund seiner Dicke bzw. Steifigkeit die Schwerkraft und/oder ein zusätzliches Vakuum alleine nicht ausreichen würde, um ein im Wesentlichen vollständiges Anliegen des Gurtes an der Schale zu gewährleisten. Umgekehrt werden vorzugsweise in der Gurtform in Längsrichtung ein oder mehrere Abschnitte der Schalenkrümmung, an welchen der herzustellende Gurt jeweils eine Dicke und/oder Steifigkeit aufweist, die eine vorgegebene Grenzdicke bzw. Grenzsteifigkeit unterschreitet, nicht nachgebildet und/oder nicht angenähert. In diesen Abschnitten kann sich der Gurt vorzugsweise von selbst, d.h. aufgrund seines Eigengewichts und/oder ggf. mithilfe eines zusätzlichen Vakuums, an die Rotorblattschale legen.

Vorzugsweise werden in der Gurtform in Längsrichtung lediglich ein oder mehrere Abschnitte der Schalenkrümmung nachgebildet und/oder angenähert, deren jeweiliger Krümmungsradius in einem vorgegebenen Verhältnis zur jeweiligen Dicke, insbesondere zur dritten Potenz der jeweiligen Dicke, und/oder Steifigkeit des Gurtes an diesen Abschnitten steht. Beispielsweise werden Abschnitte der Schalenkrümmung mit kleinen Krümmungsradien in der Gurtform bzw. im Gurt nachgebildet und/oder angenähert, wenn der Gurt dort eine große Dicke oder Steifigkeit aufweist und damit nicht flexibel genug ist, um aufgrund seines Eigengewichts und/oder mithilfe von Vakuum der Schalenkrümmung zu folgen. Dagegen werden Abschnitte der Schalenkrümmung mit großen Krümmungsradien in der Gurtform bzw. im Gurt nicht nachgebildet bzw. nicht angenähert, wenn der Gurt dort eine geringe Dicke bzw. Steifigkeit aufweist und damit flexibel genug ist, um der Schalenkrümmung zu folgen.

Vorzugsweise wird der Gurt beim Herstellen so gestaltet, dass er sich beim Einlegen in die Rotorblattschale aufgrund seines Eigengewichts verformt und an die Rotorblattschale anlegt. Alternativ oder zusätzlich wird beim und/oder nach dem Einlegen des Gurtes in die Rotorblattschale zwischen dem Gurt und der Rotorblattschale ein Unterdruck erzeugt, so dass sich der Gurt aufgrund von dabei entstehenden Saugkräften verformt und an die Rotorblattschale anlegt.

Vorzugsweise weist die mindestens eine Halteeinrichtung eine Schalenform auf, in welcher die Rotorblattschale hergestellt worden ist. Vorzugsweise wird dabei der aus der Gurtform entnommene Gurt in die Rotorblattschale eingelegt, wenn sich diese noch in der Schalenform befindet. Neben der ohnehin schon vorhandenen Schalenform, in weleher die Rotorblattschale z.B. durch Einlegen von Faserlagen oder Gewebelagen bzw. eines Geleges und anschließender Harzinfusion hergestellt wird, sind dadurch vorzugsweise keine weiteren Einrichtungen zum Halten der Rotorblattschale erforderlich.

Bei einem Gelege handelt es sich vorzugsweise um ein Flächengebilde, das aus einer oder mehreren Lagen von parallel verlaufenden, gestreckten Fäden besteht. Die Fadenlagen bei mehrlagigen Gelegen können unterschiedliche Orientierungen aufweisen, auch aus unterschiedlichen Fadendichten und unterschiedlichen Fadenfeinheiten bestehen. Im Kontext der vorliegenden Offenbarung können bei der Herstellung der Rotorblattschale und/oder des Gurtes neben oder anstelle von Geweben oder Gewebelagen stets auch Gelege verwendet werden.

Vorzugsweise weist die mindestens eine Einrichtung zum Entnehmen des mindestens einen Gurtes aus der Gurtform zwei oder mehrere Entnahmeelemente auf, welche derart angeordnet und/oder voneinander beabstandet sind, dass sich der Gurt bereits beim Entnehmen, insbesondere Abheben, aus der Gurtform derart verformt, dass sich seine Krümmung in Längsrichtung der Schalenkrümmung zumindest annähert. Dadurch wird dem Gurt schon beim Abheben von der Gurtform die "korrekte" Krümmung zumindest teilweise aufgeprägt, was das Ablegen des Gurtes in der Schale erleichtert.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: ein Beispiel einer Folge von Schritten bei der Herstellung eines Rotorblattes;
- Fig. 2: ein Beispiel eines Verlaufs der Krümmung einer für die Saugseite eines Rotor-blatts vorgesehenen Rotorblattschale;
- Fig. 3: ein Beispiel eines Verlaufs der Krümmung einer für die Druckseite eines Rotor-blatts vorgesehenen Rotorblattschale; und
- Fig. 4: ein weiteres Beispiel einer Entnahmeeinrichtung.

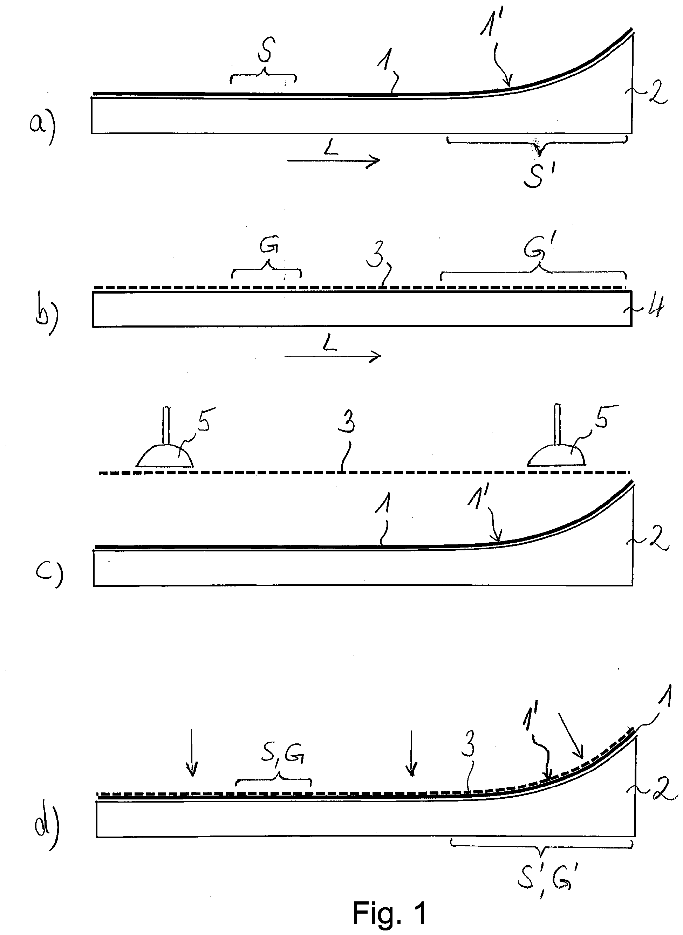

Figur 1 zeigt ein Beispiel einer Folge von Schritten a) bis d) bei der Herstellung eines Rotorblattes, insbesondere einer mit einem Gurt 3 versehenen Rotorblattschale 1, im Längsschnitt, welcher in Längsrichtung L von der Rotorblattwurzel zur Rotorblattspitze verläuft.

In einem Schritt a) wird eine Rotorblattschale 1 vorzugsweise aus einem Faserverbundwerkstoff hergestellt, indem mehrere Lagen dünner, insbesondere 1 bis 2 mm dünner, textiler Gebilde, wie etwa Gewebe, Gelege oder Vliese, in eine Schalenform 2 eingelegt und anschließend mittels einer Harzinfusionstechnik mit Harz versehen werden. Alternativ können vorimprägnierte Faserlagen (sog. Prepregs) verwendet werden, bei welchen die Faserlagen bereits in Harz, insbesondere eine Lage aus Harz, eingebettet sind und nach Erwärmung und ggf. Beaufschlagung mit Unterdruck eine stoffschlüssige Verbindung eingehen.

Je nach Formgebung der Schalenform 2 ist die jeweils erhaltene Rotorblattschale 1 für die Saugseite oder Druckseite des Rotorblattes bestimmt. Im vorliegenden Beispiel ist die Rotorblattschale 1 für die Saugseite bestimmt, wobei die dargestellte Schalenform 2 in Längsrichtung L einen aus Anschaulichkeitsgründen stark vereinfacht wiedergegebenen und nicht maßstabsgetreuen Krümmungsverlauf aufweist. Die Rotorblattschale 1 weist auf ihrer Innenseite 1' einen entsprechenden Verlauf der Schalenkrümmung auf.

In einem Schritt b) wird ein Gurt 3 hergestellt, indem vorzugsweise analog zur Herstellung der Rotorblattschale 1 mehrere Lagen dünner textiler Gebilde in oder auf eine Gurtform 4 ein- bzw. aufgelegt und anschließend mittels einer Harzinfusionstechnik mit Harz versehen werden. Wie bei der Rotorblattschale 1 können auch hier alternativ vorimprägnierte Faserlagen (sog. Prepregs) verwendet werden, die nach Erwärmung und ggf. Beaufschlagung mit Unterdruck eine stoffschlüssige Verbindung eingehen. Alternativ kann der Gurt 3 auch aus Pultrudaten gerade gebaut und ganz oder zumindest teilweise ausgehärtet werden, um dann in die Schale 1 gelegt zu werden.

Die Gurtform 4 hat in Längsrichtung L eine von der Schalenform 2 abweichende Form. Vorzugsweise kann die Gurtform 4 in Längsrichtung im Wesentlichen gerade sein bzw. keine Krümmung aufweisen. Entsprechend hat der in der Gurtform 4 hergestellte Gurt 3 in Längsrichtung L eine, insbesondere gerade, Form, die vom Verlauf der Schalenkrümmung auf der Innenseite 1' der Rotorblattschale 1 abweicht.

Vorzugsweise werden ein oder mehrere Abschnitte S der Rotorblattschale 1 und/oder der Schalenform 2 mit kleinen Krümmungsradien im Bereich entsprechender Abschnitte G des Gurtes 3 und/oder der Gurtform 4 angenähert oder nachgebildet, so dass auf der Unterseite des jeweils hergestellten Gurtes 3 im Bereich der Abschnitte G diese Krümmungen zumindest näherungsweise nachgebildet werden. Vorzugsweise gilt dies für Abschnitte S, in welchen die Rotorblattschale 1 bzw. Schalenform 2 einen Krümmungsradius aufweist, der kleiner ist als ein vorgegebener Grenzradius. Beträgt der Grenzradius z.B. 150 m, so werden die Krümmungen von Abschnitten S der Rotorblattschale 1 bzw. Schalenform 2, deren Krümmungsradius kleiner ist als 150 m, in den entsprechenden Abschnitten G des Gurtes 3 bzw. der Gurtform 4 zumindest näherungsweise nachgebildet. Aus Anschaulichkeitsgründen wurde auf eine Wiedergabe einer solchen Krümmung in den Abschnitten S und G verzichtet.

Dagegen werden vorzugsweise alle anderen Abschnitte G' des Gurtes 3 bzw. der Gurtform 4, die Abschnitten S' der Rotorblattschale 1 bzw. der Schalenform 2 mit größeren Krümmungsradien entsprechen, etwa im Bereich einer sog. Vorbiegung der Rotorblattschale 1, im Wesentlichen gerade ausgestaltet.

Nachdem der in bzw. auf der Gurtform 4 liegende Gurt 3 zumindest teilweise ausgehärtet ist, wird dieser in einem Schritt c) aus der Gurtform 4 entnommen, z.B. mithilfe einer nur schematisch angedeuteten Entnahmeeinrichtung 5, und zur Schalenform 2 gebracht, in welcher noch die darin hergestellte Rotorblattschale 1 liegt bzw. gehalten wird. Alternativ kann die Rotorblattschale 1 inzwischen bereits aus der Schalenform 2 entnommen worden sein und von einer separaten Halteeinrichtung gehalten werden.

Die Entnahmeeinrichtung kann vorzugsweise zwei oder mehrere Entnahmeelemente 5 aufweisen, die derart ausgebildet und/oder angeordnet und/oder voneinander beabstandet sind, dass dem Gurt 3 schon beim Abheben von der Gurtform 4 die "korrekte" Krümmung aufgeprägt wird, was das Ablegen in der Schale 1 erleichtert.

In einem weiteren Schritt d) wird der Gurt 3 auf die Innenseite 1' der Rotorblattschale 1 gelegt, indem beispielsweise die Entnahmeeinrichtung 5 den Gurt 3 loslässt bzw. freigibt. Dabei legt sich der Gurt 3 aufgrund seines Eigengewichts selbsttätig an die Innenseite 1' der Rotorblattschale 1 an, was durch gerade Pfeile angedeutet ist, so dass er der Schalenkrümmung im Wesentlichen folgt.

Alternativ oder zusätzlich kann auch ein Vakuum bzw. Unterdruck zwischen Gurt 3 und Rotorblattschale 1 erzeugt werden, so dass sich der Gurt 3 aufgrund der dabei entstehenden Saugkräfte an die Rotorblattschale 1 legt.

Trotz zumindest teilweiser Aushärtung ist der Gurt 3, insbesondere aufgrund der gewählten Anzahl, Art und Dicke der verwendeten Faserlagen und/oder des verwendeten Harzes und/oder des Grades der Aushärtung, vorzugsweise so beschaffen, dass er das nötige Maß an Flexibilität aufweist, um zumindest den Krümmungen des Rotorblattes 1 mit größeren Krümmungsradien zu folgen (im Beispiel Abschnitt G' bzw. S'). In anderen Abschnitten mit kleineren Krümmungsradien (im Beispiel Abschnitt G bzw. S) oder geringerer Flexibilität bzw. höherer Steifigkeit, ist der Gurt 3 dagegen so vorgeformt, dass dort seine Krümmung im Wesentlichen der jeweiligen Krümmung der Rotorblattschale 1 zumindest näherungsweise entspricht.

Der auf der Rotorblattschale 1 liegende Gurt 3 wird anschließend mit der Rotorblattschale 1, z.B. stoffschlüssig, verbunden.

In entsprechender Weise kann eine für die Druckseite des Rotorblattes vorgesehene Rotorblattschale mit einem Gurt versehen werden. Beide mit jeweils mindestens einem Gurt versehene Rotorblattschalen können dann zu einem Rotorblatt zusammengefügt werden.

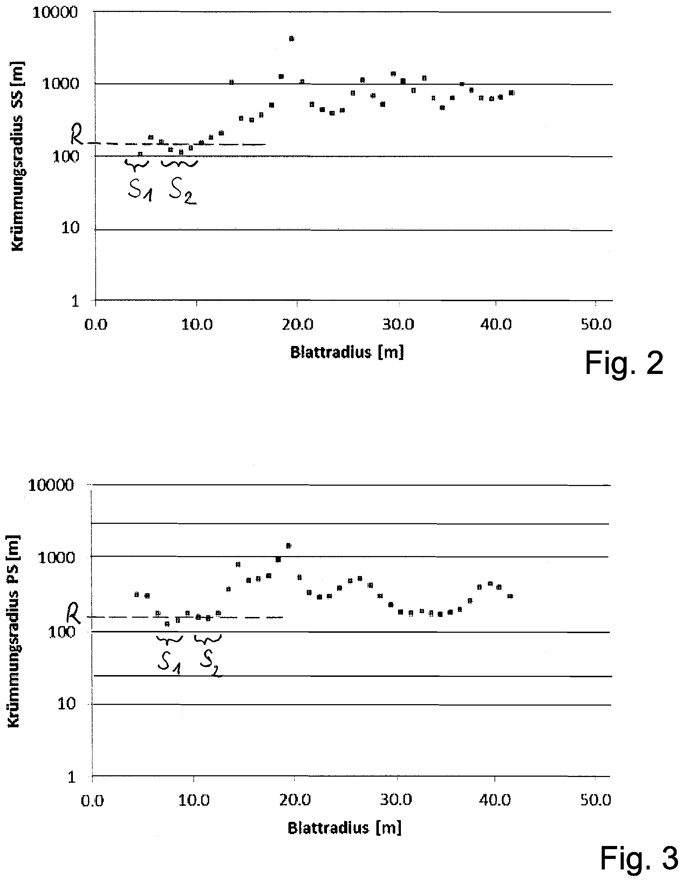

Figur 2 zeigt ein Beispiel eines Verlaufs der Krümmung, d.h. des jeweiligen Krümmungsradius, einer für die Saugseite SS eines Rotorblattes vorgesehenen Rotorblattschale über dem Blattradius in Längsrichtung der Rotorblattschale. Wie der Darstellung zu entnehmen ist, schwankt der Krümmungsradius der Rotorblattschale ja nach Blattradius zwischen etwa 100 m und mehreren 1000 m.

Im vorliegenden Beispiel weist der Verlauf der Krümmung der Rotorblattschale zwei Abschnitte S₁ und S₂ auf, an welchen der Krümmungsradius einen vorgegebenen Grenzradius R, welcher beispielhaft mit etwa 150 m vorgegeben wurde, unterschreitet.

Damit sich ein wie vorstehend beschrieben hergestellter Gurt mit einem im Wesentlichen geraden Verlauf in Längsrichtung nicht nur in Abschnitten (siehe G' bzw. S' in Figur 1) mit großen Krümmungsradien bzw. ohne Krümmung zuverlässig an die Rotorblattschale anlegt, sondern dabei auch in Abschnitten mit kleinen Krümmungsradien der Schalenkrümmung folgt, werden die Abschnitte S₁ und S₂ der Schalenkrümmung in der Gurtform 4 bzw. im Gurt 3 (siehe Figur 1) nachgebildet bzw. angenähert.

In allen übrigen Abschnitten mit vorzugsweise geradem bzw. krümmungsfreiem Verlauf ist der Gurt 3 bezüglich seiner Dicke bzw. Biegesteifigkeit vorzugsweise so aufgebaut, dass er die nötige Flexibilität hat, um sich beim Einlegen in die Rotorblattschale so zu verformen, dass er, insbesondere aufgrund seines Eigengewichts und/oder unter Einwirkung von Unterdruck, deren Krümmungsverlauf im Wesentlichen folgen kann.

Figur 3 zeigt ein Beispiel eines Verlaufs der Krümmung, d.h. des Krümmungsradius, einer für die Druckseite PS eines Rotorblattes vorgesehenen Rotorblattschale über dem Blattradius in Längsrichtung der Rotorblattschale. Wie aus der Darstellung ersichtlich ist, schwankt der jeweilige Krümmungsradius der Rotorblattschale je nach Blattradius zwischen etwa 100 m und etwa 2000 m. Wie bei Figur 2 weist auch der im vorliegenden Beispiel gezeigt Verlauf der Krümmung der Rotorblattschale zwei Abschnitte S₁ und S₂ auf, an welchen der Krümmungsradius einen vorgegebenen Grenzradius R unterschreitet. Der Grenzradius R kann dem im Beispiel der Figur 2 vorgegebenen Grenzradius von etwa 150 m entsprechen oder aber auch einen anderen Wert haben. Analog zu dem im Zusammenhang mit Figur 2 erläuterten Beispiel werden auch hier vorzugsweise die Abschnitte S₁ und S₂ der Schalenkrümmung in der Gurtform 4 bzw. im Gurt 3 (siehe Figur 1) nachgebildet bzw. angenähert. In allen übrigen Abschnitten dagegen hat die Gurtform 4 vorzugsweise einen geraden bzw. krümmungsfreien Verlauf, wobei der Gurt 3 bezüglich Dicke bzw. Biegesteifigkeit entsprechend flexibel gestaltet ist.

Alternativ oder zusätzlich zu den Krümmungsradien der Rotorblattschale 1 kann auch die jeweilige Dicke und/oder Steifigkeit des herzustellenden bzw. hergestellten Gurtes 3 im betreffenden Abschnitt G bzw. G' herangezogen werden, um zu entscheiden, welche Abschnitte bzw. Krümmungen oder Krümmungsradien der Rotorblattschale 1 im Design der Gurtform 4 nachgebildet bzw. angenähert werden bzw. für welche Abschnitte dies nicht erforderlich ist, da dort der zunächst gerade Gurt selbsttätig bzw. unter Vakuum der Schalenkrümmung der Rotorblattschale folgt.

Dabei kann vorzugsweise berücksichtigt werden, welche Krümmungsradien sich unter dem Eigengewicht des Gurtes und/oder unter zusätzlichem Vakuum einstellen können. Dabei kann vorzugsweise auch das Verhältnis des Krümmungsradius zur dritten Potenz der Gurtdicke (als Maß für die Biegesteifigkeit) herangezogen werden.

So kann sich ergeben, dass z.B. für einen Gurt an seiner dicksten Stelle mit rund 4,5 cm Dicke, etwa im Bereich der Rotorblattwurzel bis zur Rotorblattmitte, ein 4 m langer freihängender Abschnitt notwendig ist, um einen relativ kleinen Krümmungsradius von etwa 100 m zu erreichen. D.h. für solche relativ dicken bzw. steifen Abschnitte des Gurtes werden kleine Krümmungsradien der Rotorblattschale in der Gurtform nachgebildet bzw. angenähert, wenn der Gurt beim Einlegen in die Rotorblattschale über einen Abschnitt nicht mindestens etwa 4 m frei durchhängen kann. Für einen etwa 1 cm dicken Abschnitt des Gurtes, z.B. im äußeren Blattbereich, dagegen wird für den gleichen Krümmungsradius lediglich ein freihängende Abschnitt von etwa 1,2 m benötigt.

Somit kann es bevorzugt sein, dass in Abschnitten großer Gurtdicken lokale Krümmungen weiterhin in der Gurtform abgebildet werden, da bzw. wenn die Schwerkraft dort nicht ausreicht, um die Krümmung der Rotorblattschale zu erreichen.

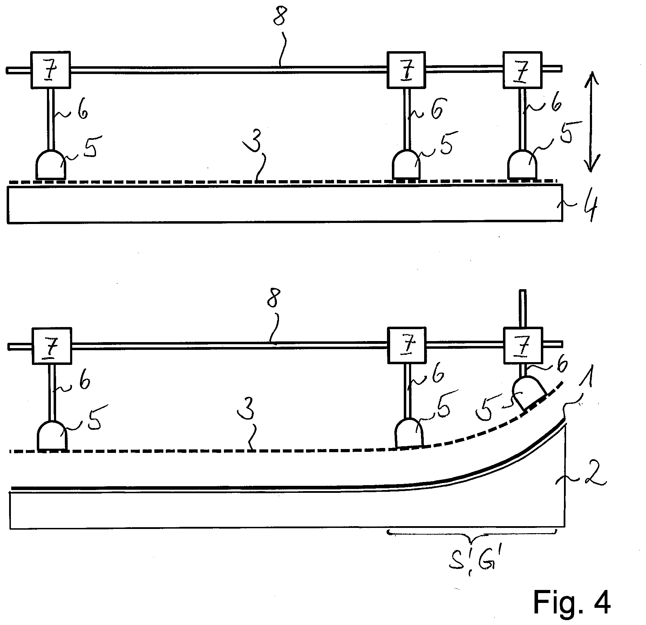

Figur 4 zeigt ein weiteres Beispiel einer Entnahmeeinrichtung, welche Entnahmeelemente 5 aufweist, die derart ausgebildet und/oder ansteuerbar sind, dass dem Gurt 3 bei und/oder nach dem Abheben von der Gurtform 4 (oberer Teil der Figur) eine Krümmung aufgeprägt wird, was das danach erfolgende Ablegen in der Rotorblattschale 1 (unterer Teil der Figur) erleichtert.

Wie in der Figur 4 schematisch veranschaulicht ist, können die Entnahmeelemente 5, bei welchen es sich beispielsweise um Saugelemente handeln kann, an jeweils einem Positionierelement 6 angebracht sein, dessen Länge veränderbar ist. Bei den Positionierelementen 6 kann es sich beispielsweise um starre Elemente, wie etwa Stangen, oder mechanisch flexible Elemente, wie etwa Seile, handeln.

Im vorliegenden Beispiel sind die Positionierelemente 6 an jeweils einer Verstelleinrichtung 7 gelagert, durch welche die jeweilige Länge der Positionierelemente 6 bzw. die Position der Entnahmeelemente 5 relativ zur Gurtform 4, insbesondere vertikal, verändert werden kann, was durch einen Doppelpfeil angedeutet ist.

Dadurch kann der entnommene Gurt 3 in einem oder mehreren Abschnitten G' des Gurtes 3 bzw. Abschnitten S' der Rotorblattschale 1 bzw. der Schalenform 2 mit größeren Krümmungsradien, etwa im Bereich einer sog. Vorbiegung der Rotorblattschale 1, bereits beim oder nach dem Entnehmen von der Gurtform 4 und/oder vor dem Einlegen in die Rotorblattschale 1 verformt und dabei vorzugsweise an die Form der Rotorblattschale 1 zumindest angehnähert werden, so dass er sich besonders zuverlässig an die Rotorblattschale 1 anlegt und der Schalenkrümmung folgt.

Die Verstelleinrichtungen 7 sind vorzugsweise an einem gemeinsamen Träger 8 angebracht, dessen Position relativ zur Gurtform 4 bzw. Schalenform 2, vorzugsweise in vertikaler und/oder horizontaler Richtung, veränderbar ist. Dadurch wird das Abheben des Gurtes 3 von der Gurtform 4 und/oder das Einlegen des Gurtes 3 in die Rotorblattschale 1 weiter verbessert bzw. erleichtert.

## Patentansprüche

1. Verfahren zur Herstellung eines Rotorblattes für eine Windenergieanlage, welches sich in einer Längsrichtung (L) von einer Rotorblattwurzel zu einer Rotorblattspitze erstreckt, mit folgenden Schritten:
- Herstellen mindestens einer sich in Längsrichtung (L) erstreckenden Rotorblattschale (1), welche in ihrem Innern (1') eine in Längsrichtung (L) verlaufende Schalenkrümmung aufweist,
- Herstellen mindestens eines sich in Längsrichtung (L) erstreckenden Gurtes (3) durch Auflegen einer oder mehrerer Gurtlagen auf eine Gurtform (4), welche in Längsrichtung (L) keine Krümmung und/oder eine von der Schalenkrümmung abweichende Krümmung aufweist, und zumindest teilweises Aushärten der auf die Gurtform (4) aufgelegten Gurtlagen,
- Entnehmen des mindestens einen Gurtes (3) aus der Gurtform (4) und Einlegen des Gurtes (3) in die mindestens eine Rotorblattschale (1), wobei sich der Gurt (3) derart verformt, dass er sich an die Rotorblattschale (1) anlegt und dabei der Schalenkrümmung im Wesentlichen folgt.

2. Verfahren nach Anspruch 1, wobei in der Gurtform (4) in Längsrichtung (L) lediglich ein oder mehrere Abschnitte (S, S₁, S₂) der Schalenkrümmung, deren jeweiliger Krümmungsradius einen vorgegebenen Grenzradius (R) unterschreitet, nachgebildet und/oder angenähert werden.

3. Verfahren nach Anspruch 2, wobei der vorgegebene Grenzradius (R) kleiner oder gleich 260 m, insbesondere kleiner oder gleich 200 m, vorzugsweise kleiner oder gleich 150 m, ist.

4. Verfahren nach einem der vorangehenden Ansprüche, wobei in der Gurtform (4) in Längsrichtung lediglich ein oder mehrere Abschnitte (S, S₁, S₂) der Schalenkrümmung nachgebildet und/oder angenähert werden, an welchen der herzustellende Gurt (3) jeweils eine Dicke und/oder Steifigkeit aufweist, die eine vorgegebene Grenzdicke bzw. Grenzsteifigkeit überschreitet.

5. Verfahren nach einem der vorstehenden Ansprüche, wobei in der Gurtform (4) in Längsrichtung (L) lediglich ein oder mehrere Abschnitte (S, S₁, S₂) der Schalenkrümmung nachgebildet und/oder angenähert werden, deren jeweiliger Krümmungsradius in einem vorgegebenen Verhältnis zur jeweiligen Dicke, insbesondere zur dritten Potenz der jeweiligen Dicke, und/oder Steifigkeit des Gurtes (3) an den Abschnitten (S, S₁, S₂) steht.

6. Verfahren nach einem der vorangehenden Ansprüche, wobei der Gurt (3) beim Herstellen so gestaltet wird, dass er sich beim Einlegen in die Rotorblattschale (1) selbsttätig verformt und an die Rotorblattschale (1) anlegt.

7. Verfahren nach einem der vorangehenden Ansprüche, wobei der Gurt (3) beim Herstellen so gestaltet wird, dass er sich beim Einlegen in die Rotorblattschale (1) aufgrund seines Eigengewichts verformt und an die Rotorblattschale (1) anlegt.

8. Verfahren nach einem der vorangehenden Ansprüche, wobei beim und/oder nach dem Einlegen des Gurtes (3) in die Rotorblattschale (1) zwischen dem Gurt (3) und der Rotorblattschale (1) ein Unterdruck erzeugt wird, so dass sich der Gurt (3) aufgrund von dabei entstehenden Saugkräften verformt und an die Rotorblattschale (1) anlegt.

9. Vorrichtung zur Herstellung eines Rotorblattes für eine Windenergieanlage, welches sich in einer Längsrichtung (L) von einer Rotorblattwurzel zu einer Rotorblattspitze erstreckt, mit:
- mindestens einer Halteeinrichtung (2) zum Halten einer sich in Längsrichtung (L) erstreckenden Rotorblattschale (1), welche in ihrem Innern (1') eine in Längsrichtung (L) verlaufende Schalenkrümmung aufweist,
- mindestens einer Gurtform (4), welche in Längsrichtung (L) keine Krümmung und/oder eine von der Schalenkrümmung abweichende Krümmung aufweist und zum Herstellen mindestens eines sich in Längsrichtung (L) erstreckenden Gurtes (3) dazu ausgebildet ist, eine oder mehrere übereinander gelegte Gurtlagen aufzunehmen und die aufgenommenen Gurtlagen zumindest teilweise aushärten zu lassen, und
- mindestens einer Einrichtung (5 bis 8) zum Entnehmen des mindestens einen Gurtes (3) aus der Gurtform (4) und Einlegen des Gurtes (3) in die von der Halteeinrichtung (2) gehaltene Rotorblattschale (1), wobei sich beim Einlegen der Gurt (3) derart verformt, dass er sich an die Rotorblattschale (1) anlegt und dabei der Schalenkrümmung im Wesentlichen folgt.

10. Vorrichtung nach Anspruch 9, wobei die mindestens eine Halteeinrichtung (2) eine Schalenform aufweist, in welcher die Rotorblattschale (1) hergestellt worden ist.

11. Vorrichtung nach Anspruch 9 oder 10, wobei die mindestens eine Einrichtung (5 bis 8) zwei oder mehrere Entnahmeelemente (5) aufweist, welche derart ausgebildet und/oder angeordnet und/oder voneinander beabstandet sind, dass sich der Gurt (3) bereits beim Entnehmen, insbesondere Abheben, aus der Gurtform (4) derart verformt, dass sich seine Krümmung in Längsrichtung (L) der Schalenkrümmung zumindest annähert.

## Claims

1. A method of manufacturing a rotor blade for a wind energy installation, which rotor blade extends in a longitudinal direction (L) from a rotor blade root to a rotor blade tip, wherein the method comprises the following steps:
- manufacturing at least one rotor blade shell (1) which extends in the longitudinal direction (L) and which has in its interior (1') a shell curvature which runs in the longitudinal direction (L),
- manufacturing at least one spar cap (3) which extends in the longitudinal direction (L), by laying one or more spar cap plies on a spar cap mould (4) which has no curvature in the longitudinal direction (L) and / or which has a curvature which differs from the shell curvature, and at least partially curing the spar cap plies laid on the spar cap mould (4),
- removing the at least one spar cap (3) from the spar cap mould (4) and inserting the spar cap (3) into the at least one rotor blade shell (1), wherein the spar cap (3) is deformed in such a way that it rests against the rotor blade shell (1) and thereby substantially follows the shell curvature.

2. The method according to claim 1, wherein, in the spar cap mould (4), in the longitudinal direction (L), only one or more portions (S, S₁, S₂) of the shell curvature, the respective radius of curvature of which falls below a predetermined threshold radius (R), are replicated and / or approximated.

3. The method according to claim 2, wherein the predetermined threshold radius (R) is smaller than or equal to 260 m, in particular smaller than or equal to 200 m, preferably smaller than or equal to 150 m.

4. The method according to any one of the preceding claims, wherein, in the spar cap mould (4), in the longitudinal direction, only one or more portions (S, S₁, S₂) of the shell curvature are replicated and / or approximated, at which portions the spar cap (3) to be manufactured in each case has a thickness and / or a stiffness which exceeds a predetermined threshold thickness or a predetermined threshold stiffness, respectively.

5. The method according to any one of the preceding claims, wherein, in the spar cap mould (4), in the longitudinal direction (L), only one or more portions (S, S₁, S₂) of the shell curvature are replicated and / or approximated, the respective radius of curvature of which portions is in a predetermined ratio to the respective thickness, in particular to the third power of the respective thickness, and / or stiffness of the spar cap (3) at the portions (S, S₁, S₂).

6. The method according to any one of the preceding claims, wherein, during manufacture of the spar cap (3), the spar cap (3) is constructed in such a way that it automatically deforms and rests against the rotor blade shell (1) when it is being inserted into the rotor blade shell (1).

7. The method according to any one of the preceding claims, wherein the spar cap (3) is constructed during manufacture in such a way that it deforms and rests against the rotor blade shell (1) due to its own weight when it is being inserted into the rotor blade shell (1).

8. The method according to any one of the preceding claims, wherein during and / or after the insertion of the spar cap (3) into the rotor blade shell (1) a negative pressure is generated between the spar cap (3) and the rotor blade shell (1) so that the spar cap (3) is deformed and so that it rests against the rotor blade shell (1) due to the suction forces generated in the course of this.

9. A device for manufacturing a rotor blade for a wind energy installation, which rotor blade extends in a longitudinal direction (L) from a rotor blade root to a rotor blade tip, wherein the device comprises:
- at least one holding device (2) for holding a rotor blade shell (1) which extends in a longitudinal direction (L) and which has in its interior (1') a shell curvature which runs in the longitudinal direction (L),
- at least one spar cap mould (4), which has no curvature in the longitudinal direction (L) and / or which has a curvature which differs from the shell curvature and which, for manufacturing at least one spar cap (3) extending in the longitudinal direction (L), is constructed to receive one or more spar cap plies which are laid one on top of the other, and to allow the received spar cap plies to cure at least partially, and
- at least one device (5 to 8) for removing the at least one spar cap (3) from the spar cap mould (4) and inserting the spar cap (3) into the rotor blade shell (1) which is held by the holding device (2), wherein, when the spar cap (3) is being inserted, the spar cap (3) is deformed in such a way that it rests against the rotor blade shell (1) and thereby substantially follows the shell curvature.

10. The device according to claim 9, wherein the at least one holding device (2) comprises a shell mould in which the rotor blade shell (1) has been manufactured.

11. The device according to claim 9 or 10, wherein the at least one device (5 to 8) comprises two or more removal elements (5) which are constructed and / or arranged and / or spaced apart from one another in such a way that the spar cap (3), when the spar cap (3) is being removed, in particular lifted off, from the spar cap mould (4), is already deformed in such a way that its curvature, in the longitudinal direction (L), at least approximates the shell curvature.

## Revendications

1. Procédé pour fabriquer une pale de rotor pour une éolienne, laquelle s'étend dans une direction longitudinale (L) à partir d'un pied de pale de rotor vers un bout de pale de rotor, avec les étapes suivantes :
- la fabrication d'au moins une coque de pale de rotor (1) s'étendant dans la direction longitudinale (L), laquelle présente dans son intérieur (1') une courbure de coque s'étendant dans la direction longitudinale (L),
- la fabrication d'au moins une courroie (3) s'étendant dans la direction longitudinale (L) par pose d'une ou plusieurs couches de courroie sur un moule de courroie (4), lequel dans la direction longitudinale (L) ne présente pas de courbure et/ou présente une courbure différente de la courbure de coque, et le durcissement au moins partiel des couches de courroie posées sur le moule de courroie (4),
- le prélèvement de l'au moins une courroie (3) du moule de courroie (4) et l'insertion de la courroie (3) dans l'au moins une coque de pale de rotor (1), dans lequel la courroie (3) se déforme de telle sorte qu'elle s'applique sur la coque de pale de rotor (1) et ce faisant suit sensiblement la courbure de coque.

2. Procédé selon la revendication 1, dans lequel seules une ou plusieurs parties (S, S₁, S₂) de la courbure de coque dont le rayon de courbure respectif passe au-dessous d'un rayon limite (R) prédéfini sont reproduites et/ou approchées dans le moule de courroie (4) dans la direction longitudinale (L).

3. Procédé selon la revendication 2, dans lequel le rayon limite (R) prédéfini est inférieur ou égal à 260 m, en particulier inférieur ou égal à 200 m, de préférence inférieur ou égal à 150 m.

4. Procédé selon l'une quelconque des revendications précédentes, dans lequel seules une ou plusieurs parties (S, S₁, S₂) de la courbure de coque sur lesquelles la courroie (3) à fabriquer présente respectivement une épaisseur et/ou rigidité qui dépasse une épaisseur limite ou rigidité limite prédéfinie sont reproduites et/ou approchées dans le moule de courroie (4) dans la direction longitudinale.

5. Procédé selon l'une quelconque des revendications précédentes, dans lequel seules une ou plusieurs parties (S, S₁, S₂) de la courbure de coque dont le rayon de courbure respectif est dans un rapport prédéfini par rapport à l'épaisseur respective, en particulier par rapport au cube de l'épaisseur respective, et/ou la rigidité de la courroie (3) sur les parties (S, S₁, S₂) sont reproduites et/ou approchées dans le moule de courroie (4) dans la direction longitudinale (L).

6. Procédé selon l'une quelconque des revendications précédentes, dans lequel la courroie (3) est conçue lors de la fabrication de sorte qu'elle se déforme automatiquement lors de l'insertion dans la coque de pale de rotor (1) et s'applique sur la coque de pale de rotor (1).

7. Procédé selon l'une quelconque des revendications précédentes, dans lequel la courroie (3) est conçue lors de la fabrication de sorte qu'elle se déforme du fait de son poids propre lors de l'insertion dans la coque de pale de rotor (1) et s'applique sur la coque de pale de rotor (1).

8. Procédé selon l'une quelconque des revendications précédentes, dans lequel lors de et/ou après l'insertion de la courroie (3) dans la coque de pale de rotor (1), un vide est généré entre la courroie (3) et la coque de pale de rotor (1), de sorte que la courroie (3) se déforme du fait de forces d'aspiration produites à cette occasion et s'applique sur la coque de pale de rotor (1).

9. Dispositif pour fabriquer une pale de rotor pour une éolienne, laquelle s'étend dans une direction longitudinale (L) à partir d'un pied de pale de rotor vers un bout de pale de rotor, avec :
- au moins un système de retenue (2) pour retenir une coque de pale de rotor (1) s'étendant dans la direction longitudinale (L), laquelle présente dans son intérieur (1') une courbure de coque s'étendant dans la direction longitudinale (L),
- au moins un moule de courroie (4), lequel dans la direction longitudinale (L) ne présente pas de courbure et/ou présente une courbure différente de la courbure de coque et est réalisé pour fabriquer au moins une courroie (3) s'étendant dans la direction longitudinale (L), recevoir une ou plusieurs couches de courroie placées les unes sur les autres et laisser durcir au moins partiellement les couches de courroie reçues, et
- au moins un système (5 à 8) pour prélever l'au moins une courroie (3) du moule de courroie (4) et insérer la courroie (3) dans la coque de pale de rotor (1) retenue par le système de retenue (2), dans lequel lors de l'insertion, la courroie (3) se déforme de telle sorte qu'elle s'applique sur la coque de pale de rotor (1) et ce faisant suit sensiblement la courbure de coque.

10. Dispositif selon la revendication 9, dans lequel l'au moins un système de retenue (2) présente une forme de coque dans laquelle la coque de pale de rotor (1) a été fabriquée.

11. Dispositif selon la revendication 9 ou 10, dans lequel l'au moins un système (5 à 8) présente deux éléments de prélèvement (5) ou plus, lesquels sont réalisés et/ou disposés et/ou espacés les uns des autres de telle sorte que la courroie (3) se déforme déjà lors du prélèvement, en particulier retrait, du moule de courroie (4), de telle sorte que sa courbure s'approche au moins de la courbure de coque dans la direction longitudinale (L).
